# EUROPÄISCHE PATENTSCHRIFT

(11) **EP 3 871 923 B1**
(45) Veröffentlichungstag und Bekanntmachung des Hinweises auf die Patenterteilung: **26.02.2025**
(21) Anmeldenummer: 21159809.9
(22) Anmeldetag: 28.02.2021
(51) Int. Cl.: B60P 3/36, A47B 91/08, A47B 13/02, B60N 3/00

(54) **TISCH ZUR VERWENDUNG IN EINEM FREIZEITFAHRZEUG**
PLATE FOR USE IN A LEISURE VEHICLE
TABLE DESTINÉE À ÊTRE UTILISÉE DANS UN VÉHICULE DE LOISIR

(30) Priorität: 29.02.2020 DE 102020105424
(43) Veröffentlichungstag der Anmeldung: 01.09.2021
(73) Patentinhaber: Bürstner GmbH & CO. KG, 77694 Kehl (DE)
(72) Erfinder: Schmiederer, Rolf, 77728 Oppenau (DE)
(74) Vertreter: Müller Schupfner & Partner Patent- und Rechtsanwaltspartnerschaft mbB (Muc)

(56) Entgegenhaltungen:
- US-A- 5 037 232
- US-A- 5 869 151
- US-A1- 2016 008 070
- US-A1- 2019 338 549

## Beschreibung

Die Erfindung betrifft ein System mit einem Tisch zur Verwendung in einem Freizeitfahrzeug.

Unter einem Freizeitfahrzeug wird ein Fahrzeug oder Anhänger verstanden, welches oder welcher zumindest ein mobil einsetzbares Element zum Camping aufweist oder zumindest temporär eine Einrichtung zum Campen aufweisen kann. Unter einem Freizeitfahrzeug wird insbesondere ein Campingfahrzeug verstanden. Unter einem Freizeitmobil wird ein motorisiertes Freizeitfahrzeug verstanden. Unter einem Campingfahrzeug wird vorliegend ein Wohnmobil oder ein Wohnwagen verstanden, also vorzugsweise diejenigen Fahrzeuge oder Anhänger, bei denen ein Nutzer eine Möglichkeit zum Schlafen oder Wohnen in diesem Fahrzeug hat. Eine Motorisierung der Fahrzeuge ist nicht erforderlich. Eine andere Bezeichnung für ein Wohnmobil ist zum Beispiel ein Reisemobil. Ein Wohnwagen kann zum Beispiel alternativ als Caravan oder Campinganhänger bezeichnet werden.

Im Stand der Technik sind Tische im Freizeit- oder Campingbereich bekannt. Ferner sind im Stand der Technik auch Tische mit Bodenplatten bekannt, welche frei auf einer Oberfläche aufgestellt werden können.

US 5 037 232 beschreibt einen Mechanismus zum Verriegeln von te-leskopierbaren Gegenständen und zum Lösen dieser Gegenstände aus einem solchen Zustand durch Drehen der Gegenstände zueinander. Der Gegenstand wird im Zusam-menhang mit einem Tisch dargestellt und beschrieben, der am Boden eines Fahrzeugs, Schiffes oder dergleichen befestigt ist.

US 2016/0008080 A1 beschreibt einen erweiterbaren und faltbaren Mayoständer mit einer Tragsäule mit einem ersten und einem zweiten Ende und einer Längsachse. Eine Tischplatte ist mit dem ersten Ende der Tragsäule verbunden, und ein Sockel ist mit dem zweiten Ende der Tragsäule verbunden. Die Basis hat einen zentra-len Teil mit daran angelenkten Flügeln; jeder Flügel hat eine Vielzahl von Beinen, die durch entsprechende Stiftverbindungen mit ihm verbunden sind, so dass die Beine von einer entfalteten Konfiguration in eine kompakte Aufbewahrungskonfiguration gefaltet werden können.

Eine Aufgabe der vorliegenden Erfindung liegt darin, den Stand der Technik zu verbessern. Es ist insbesondere eine Aufgabe der Erfindung, einen im Freizeit- oder Campingbereich verwendbaren Tisch anzugeben, welcher flexibel verwendbar, insbesondere an unterschiedlichen Orten aufstellbar, ist. Der erfindungsgemäße Tisch soll weiterhin praktisch, leicht und gleichzeitig robust sein.

Diese Aufgabe wird durch ein System mit den Merkmalen des unabhängigen Patentanspruchs 1 gelöst. Vorteilhafte Weiterbildungen der Erfindung sind in den Unteransprüchen angegeben.

Die Stützfüße des Tischbeins dienen dazu, dem Tisch einen stabilen Stand zu geben. Im ausgeklappten Zustand der Stützfüße berührt der Tisch die Oberfläche, auf welcher der Tisch aufgestellt ist, mit den Stützfüßen und einem unteren Ende des Tischbeins, bevorzugt lediglich mit den Stützfüßen und noch weiter bevorzugt lediglich mit den jeweiligen Enden der Stützfüße.

Im ausgeklappten Zustand der Stützfüße liegen die Stützfüße auf der Oberfläche mit allen Punkten, bevorzugt mit mindestens jeweils einem Punkt, auf.

Erfindungsgemäß ist der Tisch des Systems so am Boden befestigbar, dass er im Inneren des Freizeitfahrzeugs als Tisch verwendbar ist. Für die Unfallsicherheit in Freizeitfahrzeugen, insbesondere Freizeitmobil, ist es wichtig, dass der Tisch fest am Boden befestigbar ist.

Bevorzugt kann das Tischbein eine Tischsäule sein.

Der erfindungsgemäße Tisch kann vorteilhafterweise im Inneren eines Freizeitfahrzeugs als auch außerhalb des Freizeitfahrzeug flexibel verwendet werden. Der Tisch kann schnell und unkompliziert zwischen den beiden genannten Orten transportiert und aufgestellt bzw. installiert werden. Dies wird vorteilhafterweise ohne eine Bodenplatte am Tischgestell bzw. ohne zusätzliche Bodenplatte erreicht, wodurch der erfindungsgemäße Tisch Gewicht und Platz einsparen kann

Erfindungsgemäß wird eine reversibel lösbare Befestigung des Tisches am Boden mithilfe eines mit dem Boden fest verbundenen, oben offenen Hohlzylinder realisiert, in welchem das Tischbein befestigbar, insbesondere einklemmbar, ist. Hierbei ist die Höhe des Hohlzylinders kleiner als die Länge des Tischbeins.

Alternativ erfindungsgemäß ist die reversibel lösbare Befestigung des Tisches am Boden ein im Boden angeordnetes Loch, in welches das Tischbein passgenau eingepasst ist.

Gemäß einer weiteren bevorzugten Ausführungsform weist der Tisch ferner eine an einer Außenseite des Tischbeins in der Höhe verstellbare Vorrichtung auf, welche in einer ersten Position ein Ausklappen der Stützfüße verhindert und in einer zweiten Position ein Ausklappen der Stützfüße nicht verhindert.

Bevorzugt ist die in der Höhe verstellbare Vorrichtung ein reversibel lösbarer Ring, insbesondere ein Feststellring, Haltering oder Klemmring.

Die erste Position ist hierbei bevorzugt in einem mittleren Bereich des Tischbeins, bevorzugt in der Mitte der gesamten Länge des Tischbeins. Die zweite Position liegt hierbei bevorzugt an dem von der Tischplatte entfernten Ende des Tischbeins.

Der Ring verhindert in der ersten Position ein Ausklappen der Stützfüße, welche bevorzugt automatisch nach außen klappen, falls die Vorrichtung, insbesondere der Ring, nicht vorhanden ist. Dieser Mechanismus kann für jeden Stützfuß bevorzugt mithilfe einer Feder realisiert werden. Somit kann der Ring bevorzugt in der ersten Position befestigt werden, in der er das Ausklappen der Stützfüße verhindert, sodass die Stützfüße weiterhin am Tischbein anliegen. Falls der Ring in der ersten Position gelöst wird und zum Ende des Tischbeins, d. h. zur zweiten Position hin verschoben wird, so klappen die Stützfüße oberhalb des Rings nach außen. Falls der Ring an der zweiten Position angeordnet ist, so sind die Stützfüße vollkommen nach außen geklappt.

Bevorzugt ist das Freizeitfahrzeug ein Campingfahrzeug.

Gemäß noch einer weiteren, bevorzugten Ausführungsform sind die Stützfüße jeweils an einem von der Tischplatte abgewandten Ende des Tischbeins angelenkt.

Bevorzugt liegen Anlenkpunkte der Stützfüße in einer Ebene, welche parallel zur Ebene der Tischplatte verläuft.

Gemäß einer weiteren Ausführungsform sind die Anlenkpunkte der Stützfüße an einer Außenfläche des Tischbeins äquidistant angeordnet. Im Fall von N Stützfüßen ist es ferner bevorzugt, dass die Anlenkpunkte an der Außenfläche des Tischbeins jeweils um 360°/N verschoben angeordnet sind.

Gemäß noch einer weiteren Ausführungsform liegen die Stützfüße in dem eingeklappten Zustand an dem Tischbein an. Hierbei verlaufen die Stützfüße bevorzugt von den jeweiligen Anlenkpunkten zur Tischplatte hin.

Gemäß einer anderen bevorzugten Ausführungsform bilden die Stützfüße in dem ausgeklappten Zustand mit dem Tischbein jeweils einen stumpfen Winkel. Ein stumpfer Winkel ist ein Winkel, welcher größer als 90° und kleiner als 180° ist. Hierdurch wird vorteilhafterweise erreicht, dass die Stützfüße den Tisch samt Tischbein unterstützen können. Insbesondere für den Fall von drei Stützfüßen wird erreicht, dass die Enden der Stützfüße in einer Ebene liegen können, welche auf einer Oberfläche oder auf einem Boden aufliegen können, so dass der Tisch samt Tischbein aufstellbar ist.

Bevorzugt ist die Oberfläche eine im Wesentlichen ebene Oberfläche. Die Oberfläche kann eine Oberfläche des Bodens im Freien, auf einem Campingplatz oder eine andere geeignete Oberfläche sein, auf der einen Tisch aufstellbar ist.

Ein Ausführungsbeispiel der Erfindung ist in den Zeichnungen dargestellt und wird in der nachfolgenden Beschreibung näher erläutert.
Figur 1 zeigt einen Tisch gemäß einer Ausführungsform der Erfindung, welcher an einem Boden im Inneren eines Freizeitfahrzeugs reversibel lösbar befestigt ist.
Figur 2 zeigt den Tisch der Ausführungsform der Figur 1, wobei die Stützfüße im ausgeklappten Zustand sind und der Tisch auf einer Oberfläche aufgestellt ist.

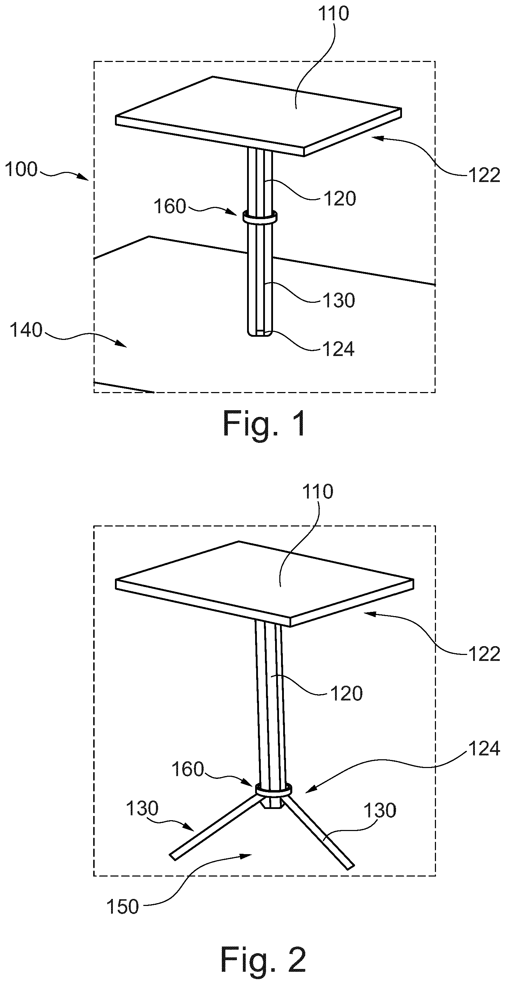

In Figur 1 ist ein Tisch 100, welcher in einem Freizeitfahrzeug oder in der Nähe eines Freizeitfahrzeuges zum Beispiel auf einem Campingplatz verwendbar ist, abgebildet. Der Tisch 100 weist eine Tischplatte 110 auf, welche bei bestimmungsgemäßen Gebrauch des Tisches 100 an einem oberen Ende 122 eines Tischbeins 120 befestigt ist. Das Tischbein 120 ist vorliegend als Tischsäule ausgeführt. Drei Stützfüße 130 sind jeweils an einem von der Tischplatte 110 abgewandten Ende 124 des Tischbeins 120 angelenkt. In der Abbildung der Figur 1 liegen die drei Stützfüße 130 am Tischbein 120 an. Hierbei werden die drei Stützfüße 130 durch einen Haltering 160, welcher an einer Außenseite des Tischbeins 120 in der Höhe verstellbar ist, in Position gehalten, d. h. die Stützfüße 130 werden durch den Haltering 160 am Ausklappen gehindert. Jeder Stützfuß 130 weist eine Feder auf, die ein Ausklappen des jeweiligen Stützfußes 130 bewirkt.

In Figur 1 ist das Tischbein 120 am von der Tischplatte 110 abgewandten Ende 124 mit dem Boden 140 reversibel lösbar befestigt. Dies wird vorliegend durch ein Festklemmen des Tischbeins 120 im Boden 140 realisiert.

Figur 2 zeigt dieselbe Ausführungsform des Tisches 100 wie die Figur 1, wobei die Stützfüße 130 hier im ausgeklappten Zustand abgebildet sind, so dass der Tisch 100 auf einer Oberfläche 150 aufgestellt werden kann, so wie hier abgebildet.

Wenn der Tisch 100 ausgehend vom in Figur 1 abgebildeten Zustand vom Boden 140 im Inneren des Freizeitfahrzeug gelöst wird, so kann der Haltering 160 zum von der Tischplatte 110 abgewandten Ende 124 des Tischbeins 120 bewegt werden, sodass die drei Stützfüße 130 vom Tischbein 120 nach außen weg geklappt werden, bis jeder Stützfuß 130 mit dem Tischbein 120 einen stumpfen Winkel von zwischen 120 und 140° bildet. Die drei von den Anlenkpunkten wegweisenden Enden der Stützfüße 130 liegen in einer Ebene und sitzen auf der Oberfläche 150 auf, welche zum Beispiel eine Oberfläche eines Campingplatzes sein kann.

## Patentansprüche

1. System umfassend
- einen Tisch (100) zur Verwendung in einem Freizeitfahrzeug und
- einen Hohlzylinder, der mit dem Boden (140) des Freizeitfahrzeugs fest verbundenen ist und oben offen ist, oder ein im Boden angeordnetes Loch, wobei der Tisch aufweist:
eine Tischplatte (110); und
ein an der Tischplatte (110) befestigtes Tischbein (120),
**dadurch gekennzeichnet, dass**
das Tischbein (120) mindestens drei Stützfüße (130) aufweist,
wobei im eingeklappten Zustand der Stützfüße (130) das Tischbein (120) des Tisches (100) an einem Boden (140) im Inneren des Freizeitfahrzeugs reversibel lösbar befestigbar ist, wobei die reversibel lösbare Befestigung des Tisches (100) am Boden (140) mithilfe des mit dem Boden (140) fest verbundenen, oben offenen Hohlzylinders, in welchem das Tischbein (120) befestigbar ist, oder mithilfe des im Boden angeordneten Lochs, in welches das Tischbein passgenau einpassbar ist, realisiert ist; und
im ausgeklappten Zustand der Stützfüße (130) der Tisch (100) auf einer Oberfläche (150) aufstellbar ist.

2. System nach Anspruch 1,
**dadurch gekennzeichnet, dass**
eine an einer Außenseite des Tischbeins (120) in der Höhe verstellbare Vorrichtung (160), welche in einer ersten Position ein Ausklappen der Stützfüße (130) verhindert und in einer zweiten Position ein Ausklappen der Stützfüße (130) nicht verhindert.

3. System nach einem der vorangegangenen Ansprüche,
**dadurch gekennzeichnet, dass**
das Freizeitfahrzeug ein Campingfahrzeug ist.

4. System nach einem der vorangegangenen Ansprüche, **ferner aufweisend:**
die Stützfüße (130) jeweils an einem von der Tischplatte (110) abgewandten Ende (124) des Tischbeins (120) angelenkt sind.

5. System nach dem vorangegangenen Anspruch,
**dadurch gekennzeichnet, dass**
Anlenkpunkte der Stützfüße (130) in einer Ebene liegen, welche parallel zur Ebene der Tischplatte (110) verläuft.

6. System nach dem vorangegangenen Anspruch,
**dadurch gekennzeichnet, dass**
die Anlenkpunkte der Stützfüße (130) an einer Außenfläche des Tischbeins (120) äquidistant angeordnet sind.

7. System nach einem der vorangegangenen Ansprüche,
**dadurch gekennzeichnet, dass**
die Stützfüße (130) in dem eingeklappten Zustand an dem Tischbein (120) anliegen.

8. System nach einem der vorangegangenen Ansprüche,
**dadurch gekennzeichnet, dass**
die Stützfüße (130) in dem ausgeklappten Zustand mit dem Tischbein (120) jeweils einen stumpfen Winkel bilden.

9. System nach einem der vorangegangenen Ansprüche,
**dadurch gekennzeichnet, dass**
die Oberfläche (150) eine im Wesentlichen ebene Bodenoberfläche ist.

## Claims

1. a system comprising
- a table (100) for use in a recreational vehicle and
- an open-top hollow cylinder that is attached to the floor (140) of the recreational vehicle, or a hole arranged in the floor, the table comprising:
a table top (110); and
a table leg (120) attached to the table top (110),
**characterized in that**
the table leg (120) has at least three support feet (130),
wherein, in the folded-in state of the support feet (130), the table leg (120) of the table (100) is reversibly detachably attached to the floor (140) inside the recreational vehicle,
wherein the reversibly detachable attachment of the table (100) to the floor (140) is realized by means of the open-top hollow cylinder, which is firmly connected to the floor and to which the table leg (120) is attachable, or by means of the hole arranged in the floor, into which the table leg fits precisely; and
when the support feet (130) are folded-out, the table (100) can be set up on a surface (150).

2. System (100) according to claim 1,
**characterized in that**
a mechanism (160) that is adjustable in height on an outer surface of the table leg (120) which in a first position prevents the support feet (130) from being folded out and in a second position does not prevent the support feet (130) from being folded out.

3. System according to one of the previous claims,
**characterized in that**
the recreational vehicle is a camping vehicle.

4. System according to one of the previous claims,
**further comprising:**
the support feet (130) are each hinged to an end (124) of the table leg (120) facing away from the table top (110).

5. A system according to the previous claim,
**characterized in that**
the pivot points of the support feet (130) lie in a plane that runs parallel to the plane of the table top (110).

6. System according to the previous claim,
**characterized in that**
the pivot points of the support feet (130) are arranged equidistantly on an outer surface of the table leg (120).

7. System according to one of the previous claims,
**characterized in that**
the support feet (130) rest against the table leg (120) in the folded-in state.

8. A system according to one of the previous claims,
**characterized in that**
the support feet (130) each form an obtuse angle with the table leg (120) in the folded-out state.

9. System according to one of the previous claims,
**characterized in that**
the surface (150) is a substantially flat floor surface.

## Revendications

1. Système comprenant
- une table (100) destinée à une utilisation dans un véhicule de loisirs, et
- un cylindre creux, qui est relié solidairement au plancher (140) du véhicule de loisirs et ouvert sur le dessus, ou un trou agencé dans le plancher, dans lequel la table présente :
un plateau de table (110) ; et
un pied de table (120) fixé au niveau du plateau de table (110),
**caractérisé en ce que**
le pied de table (120) présente au moins trois supports de pied (130),
dans lequel, dans l'état replié des supports de pied (130), le pied de table (120) de la table (100) peut être fixé de manière réversible et
détachable sur un plancher (140) dans l'intérieur du véhicule de loisirs, la fixation réversible et détachable de la table (100) sur le plancher (140) étant réalisée à l'aide du cylindre creux ouvert sur le dessus, qui est relié solidairement au plancher (140), dans lequel le pied de table (120) peut être fixé, ou à l'aide du trou agencé dans le plancher, dans lequel le pied de table peut être précisément adapté ; et
dans l'état déplié des supports de pied (130), la table peut être placée sur une surface (150).

2. Système selon la revendication 1,
**caractérisé en ce que**
un dispositif (160) réglable en hauteur au niveau d'un côté extérieur du pied de table (120) empêche un déploiement des supports de pied (130) dans une première position et n'empêche pas un déploiement des supports de pied (130) dans une seconde position.

3. Système selon l'une quelconque des revendications précédentes,
**caractérisé en ce que**
le véhicule de loisirs est un véhicule de camping.

4. Système selon l'une quelconque des revendications précédentes, présentant en outre :
les supports de pied (130) qui sont respectivement articulés au niveau d'une extrémité (124) du pied de table (120) qui est détournée du plateau de table (110).

5. Système selon l'une quelconque des revendications précédentes,
**caractérisé en ce que**
des points d'articulation des supports de pied (130) se trouvent dans un plan qui s'étend parallèlement au plan du plateau de table (110).

6. Système selon l'une quelconque des revendications précédentes,
**caractérisé en ce que**
les points d'articulation des supports de pied (130) sont agencés de manière équidistante au niveau d'une surface extérieure du pied de table (120).

7. Système selon l'une quelconque des revendications précédentes,
**caractérisé en ce que**
les supports de pied (130), dans l'état replié, sont en contact avec le pied de table (120).

8. Système selon l'une quelconque des revendications précédentes,
**caractérisé en ce que**
les supports de pied (130), dans l'état déplié, forment respectivement un angle obtus avec le pied de table (120).

9. Système selon l'une quelconque des revendications précédentes,
**caractérisé en ce que**
la surface (150) est une surface de plancher sensiblement plane.
